# EUROPÄISCHE PATENTSCHRIFT

(11) **EP 1 818 000 B1**
(45) Veröffentlichungstag und Bekanntmachung des Hinweises auf die Patenterteilung: **29.09.2010**
(21) Anmeldenummer: 07004158.7
(22) Anmeldetag: 14.08.2002
(51) Int. Cl.: A47L 11/24, E01H 1/08

(54) **Bodenreinigungsmaschine mit Filterreinigungsmittel**
Ground surface cleaning machine with filter cleaning means
Machine de nettoyage du sol avec moyens pour le nettoyage du filtre

(30) Priorität: 07.09.2001 DE 10143941
(43) Veröffentlichungstag der Anmeldung: 15.08.2007
(62) Teilanmeldung aus: 02018129.3
(73) Patentinhaber: Hako-Werke GMBH, D-23843 Bad Oldesloe (DE)
(72) Erfinder: Protz, Carsten, 23730 Altenkrempe (DE)
(74) Vertreter: UEXKÜLL & STOLBERG

(56) Entgegenhaltungen:
- EP-A2- 0 860 554
- GB-A- 1 224 068
- US-A- 3 759 014
- US-A- 4 032 307
- US-A- 4 328 014
- US-A- 4 787 923

## Beschreibung

Die Erfindung bezieht sich auf eine fahrbare Bodenreinigungsmaschine mit einem System zur Aufnahme von Schmutz vom Boden und Transport des Schmutzes in einen Schmutzsammelbehälter und zur Förderung von schmutzbeladener Luft durch mindestens einen Plattenfilter mit rahmenförmigen Trägerteil und einer an diesem befestigten, lamellenförmiges Filtermaterial aufweisenden Filteranordnung

Fahrbare Bodenreinigungsmaschinen mit Saugsystemen gibt es in unterschiedlichen Ausführungen und sowohl als Aufsitzermaschinen als auch als handgeführte Maschinen. Bei sogenannten Kehrsaugmaschinen wirft eine Kehrbürste oder -walze vom Boden aufgenommenen Schmutz in einen Schmutzsammelbehälter, und die mit dem von der Kehrbürste oder -walze aufgewirbelten Feinstaub belastete Luft wird durch mindestens einen Filter gesaugt, bevor sie wieder in die umgebende Luft geleitet wird, um so von Schmutzbestandteilen befreit zu werden. Bei sogenannten Straßenkehrmaschinen wird der Schmutz durch einen vom Saugsystem erzeugten Luftstrom vom Boden aufgenommen und in einen Schmutzsammelbehälter befördert, worauf auch hier in einzelnen Fällen eine Reinigung der Luft mittels mindestens eines Filters erfolgt, bevor die Luft wieder in die Umgebung gelangt. Die in allen Fällen erfolgende Ablagerung von Schmutzbestandteilen am Material des Filters oder der Filter führt allmählich zu einer Reduzierung der Durchlässigkeit des Filters. Es ist daher erforderlich, den Kehrsaugbetrieb bzw. Saugbetrieb, d.h. den Bodenreinigungsbetrieb zeitweise zu unterbrechen, um eine Reinigung des Filters vorzunehmen. Diese Reinigung kann durch mechanische Abstreifer erfolgen, die über das Filtermaterial, etwa die durch ziehharmonikaförmige Faltung gebildeten Lamellen eines Plattenfilters bzw. eines Patronenfilters, geführt werden.

Es ist auch bekannt, eine Reinigung dadurch durchzuführen, dass man dem Halterahmen des Filters mechanische Schwingungsenergie zuführt, etwa indem man ihn mit einem Rüttelmotor, also einem Motor koppelt, an dessen Motorwelle sich beispielsweise eine exzentrisch befestigte Masse befindet.

Es ist auch bereits bekannt (GB-B-1 224 068), das Rütteln der Filterelemente einer fahrbaren Bodenreinigungsmaschine mit der Resonanzfrequenz der Filteranordnung vorzunehmen. Dabei wird die Resonanzfrequenz entweder entsprechend dem Aufbau der Filteranordnung fest eingestellt oder im Betrieb angepasst. Bei dieser Bodenreinigungsmaschine weist die Filteranordnung längliche Filterelemente auf, die mit einem Ende fest mit dem Luftkanal verbunden sind und deren andere Enden an einem sich quer erstrekkenden Schwingbalken befestigt sind. Der Schwingbalken kann mittels eines Rüttelmotors in Schwingungen in Richtung seiner Längserstreckung versetzt werden, wobei seine Längsbewegungen durch Anschläge begrenzt werde. Abgesehen davon, dass dabeo stoßartige Belastungen auftreten, die Lärm und Verschleiss erzeugen, werden die Filterelement infolge ihrer festen Einspannung am Luftkanal beim Reinigungsvorgang um diese Einspannung verschwenkt. Dadurch nehmen die die Reinigung verursachende Verlagerungsbewegungen der Bereiche der Filterelemente vom Schwingbalken zum Luftkanal ab, d.h. die Reinigungswirkung verringert sich mit der Nähe zum Luftkanal ab.

Das bekannte Rütteln mit der Resonanzfrequenz der Filteranordnung ist in der Praxis aber auch deshalb wenig effektiv, weil die wirksame Resonanzfrequenz der Filteranordnung von zahlreichen Faktoren abhängt, die einerseits fertigungsbedingt sind (Schwankungen in der Zusammensetzung des Filtermaterials, Toleranzen der Halterahmenbauteile, Toleranzen der Schwingungserzeuger) und die andererseits im Betrieb der Bodenreinigungsmaschine auftreten. Bei Letzterem handelt es sich insbesondere um die in der Filteranordnung enthaltene Schmutzmenge. Bei entsprechend dem Filteraufbau fest eingestellter "Resonanzfrequenz" wird diese nur in den seltensten Fällen mit der beim jeweiligen Reinigungsfall gegebenen Resonanzfrequenz der Filteranordnung übereinstimmen. Da aber die jeweils tatsächlich vorhandene Resonanzfrequenz nicht gemessen werden kann, kann auch eine Frequenzeinstellung für den einzelnen Reinigungsvorgang nur durch Versuche erfolgen. Dies ist wiederum so zeitaufwendig, dass man eigentlich auf den Versuch des Rüttelns mit Resonanzfrequenz gleich verzichten kann.

Eine Bodenreinigungsmaschine gemäß dem Oberbegriff des unabhängigen Anspruchs 1 ist aus der Druckschnitt US-A-4787923 bekannt. Bei der Bodenreinigungsmaschine nach US-A-4032 307 läuft der Elektromotor des Schwingungserzeugers mit einer Drehzahl, die oberhalb der Resonanzfrequenz der Filteranordnung liegt.

Es ist Aufgabe der Erfindung, das durch Zufuhr von mechanischer Schwingungsenergie zum Halterahmen erfolgende Reinigen des Filters einer Bodenreinigungsmaschine so zu verbessern, dass in verhältnismäßig kurzer Zeit ein äusserst wirksames Ablösen des am Filtermaterial anhaftenden Schmutzes bewirkt wird.

Zur Lösung dieser Aufgabe dient eine fahrbare Bodenreinigungsmaschine mit einem System zur Aufnahme von Schmutz vom Boden und Transport des Schmutzes in einen Schmutzsammelbehälter und zur Förderung von schmutzbeladener Luft durch mindestens einen Plattenfilter mit rahmenförmigen Trägerteil und einer an diesem befestigten, lamellenförmiges Filtermaterial aufweisenden Filteranordnung, mit einem elastisch abgestützten und begrenzt bewegbar gehaltenen rechteckigen oder quadratischen Halterahmen, mit dem das Trägerteil fest, jedoch lösbar verbunden ist, und mit einem Schwingungserzeuger, der bei unterbrochenem Bodenreinigungsbetrieb zur Reinigung der Filteranordnung auf den Halterahmen einwirken kann, wobei dieser mit Schwingungsenergie einer Frequenz beaufschlagt wird, die während eines Reinigungsvorgangs mindestens viermal einen Frequenzbereich durchläuft, in dem die Resonanzfrequenz der Filteranordnung liegt, so dass die Filteranordnung in der Hauptebene des Halterahmens und in Richtung senkrecht zur Längserstreckung der Lamellen in Schwingungen versetzt wird.

Die erfindungsgemäße Bodenreinigungsmaschine enthält einen mit Schwingungsenergie beaufschlagbaren Plattenfilter, der in einem rechteckigen oder quadratischen Halterahmen angeordnet und elastisch abgestützt und begrenzt bewegbar gehalten ist. Die Beaufschlagung mit Schwingungsenergie erfolgt so, dass die am Trägerteil gehalterte, aus lamellenförmigem Filtermaterial bestehende Filteranordnung in der Plattenebene und in Richtung senkrecht zur Längserstreckung der Lamellen in Schwingungen versetzt wird. Dabei wird die bekannte "theoretische" Resonanzfrequenz der Filteranordnung zugrundegelegt, jedoch berücksichtigt, dass diese in der Praxis nicht die für den jeweiligen Reinigungsvorgang geltende "tatsächliche" Resonanzfrequenz ist, die beispielsweise von Fertigungstoleranzen und auch vom Grad der Schmutzbeladung der Filteranordnung abhängt. Durch das Durchlaufen eines Frequenzbereichs, der nicht nur die "theoretische", sondern auch die "tatsächliche" Resonanzfrequenz enthält, wird sichergestellt, dass der Halterahmen des Filters und damit der Filter derart mit Schwingungsenergie beaufschlagt wird, dass seine Filteranordnung, die das Filtermaterial enthält, zumindest viermal, vorzugsweise sechsmal bis zehnmal, mit ihrer jeweiligen "tatsächlichen" Resonanzfrequenz erregt wird. Dies führt zu einer maximalen Auslenkung des Filtermaterials in beide Richtungen der Schwingungsbewegung und damit insbesondere zu einer starken Beschleunigung der Schmutzablagerungen auf dem Filtermaterial bei der Umkehr der Bewegungsrichtung des Filtermaterials, was eine besonders gute Ablösung der Schmutzteilchen vom Filtermaterial zur Folge hat. Durch dieses mehrfache Erregen mit der Resonanzfrequenz ergibt sich daher in verhältnismäßig kurzer Zeit eine weit bessere Ablösung von Schmutzablagerungen vom Filtermaterial als dies möglich ist, wenn der Filter mit Hilfe eines Rüttelmotors mit einer allein durch die Drehzahl des Rüttelmotors bestimmten, im Wesentlichen konstanten, jedoch nur in der Nähe der "tatsächlichen" Resonanzfrequenz liegenden Frequenz beaufschlagt wird.

Der zu durchlaufende Frequenzbereich muss einerseits ausreichend groß gewählt werden, so dass die "tatsächliche" Resonanzfrequenz auch in diesem liegt, und andererseits soll er möglichst klein sein, damit bei dem gewünschten langsamen Durchlaufen des Frequenzbereichs und der dadurch gegebenen verhältnismäßig langen Erregung mit der Resonanzfrequenz die zeitlichen Abstände zwischen dem aufeinanderfolgenden Durchlaufen der "tatsächlichen" Resonanzfrequenz möglichst kurz sind, der gesamte Reinigungsvorgang also verhältnismäßig wenig Zeit erfordert. In bevorzugter Ausgestaltung ist daher die obere Grenzfrequenz des Frequenzbereichs maximal um 30 % größer als die "theoretische" Resonanzfrequenz, vorzugsweise maximal um 20 % und in ganz besonders bevorzugter Weise maximal um 10 %. Entsprechend ist auch die untere Grenzfrequenz des Frequenzbereichs maximal um 30 % kleiner als die "theoretische" Resonanzfrequenz und vorzugsweise maximal um 20 % und ganz besonders bevorzugt maximal um 10 %. Die hierbei zugrundegelegte "theoretische" Resonanzfrequenz ist, wie bereits erwähnt, die für die Filteranordnung eines Filters der interessierenden Bauart anzunehmende Resonanzfrequenz, also ein Mittelwert, der weder Abweichungen infolge Toleranzen des Filtermaterials und des übrigen Aufbaus noch Änderungen der Resonanzfrequenz durch Ablagerung von Schmutzteilchen berücksichtigt.

Die Erfindung wird im Folgenden anhand der Ausführungsbeispiele zeigenden Figuren näher erläutert.
- Figur 1: zeigt in einer Seitenansicht eine Bodenreinigungsmaschine in Form einer üblichen Kehrsaugmaschine, in der die Erfindung eingesetzt werden kann.
- Figur 2: zeigt schematisch die Halterung eines Plattenfilters in einem Filtergehäuse einer fahrbaren Bodenreinigungsmaschine.

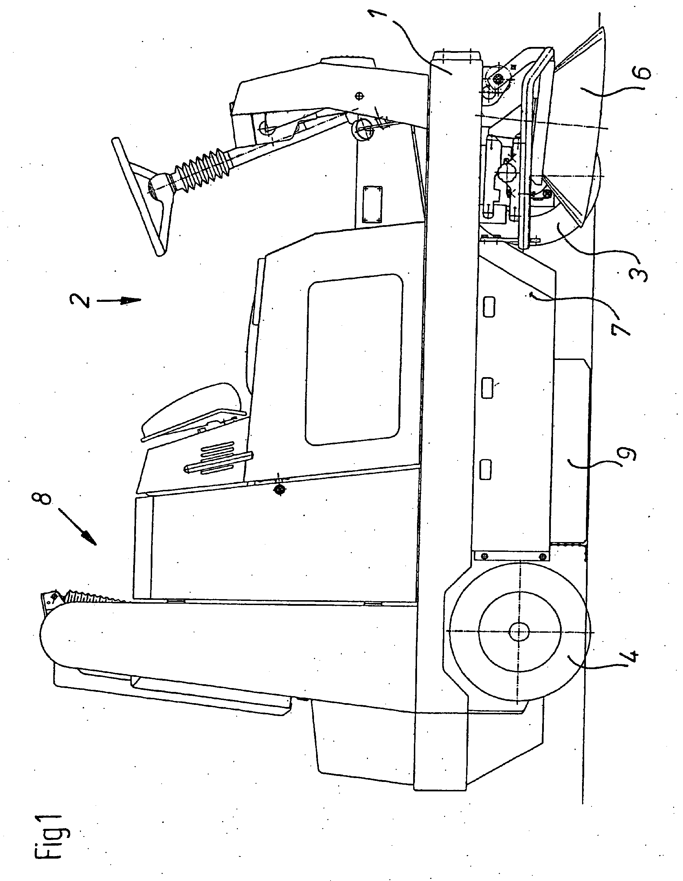

Die in Figur 1 schematisch dargestellte Kehrsaugmaschine hat einen Rahmen 1, an dem ein vorderes Rad 3 und hintere Räder 4 gehaltert sind und auf dem ein Bedienungsbereich 2 vorgesehen ist, der einen Fahrersitz, ein an einer Lenksäule befestigtes Steuerrad sowie die entsprechenden Bedienungselemente für den Betrieb der Kehrsaugmaschine aufweist. Unterhalb des Fahrersitzes sind üblicherweise die für die Energieversorgung benötigten Batterien oder ein Verbrennungsmotor untergebracht. Auf dem hinteren Teils des Rahmens 1 sind im Bereich 8 die für den Fahrbetrieb und den Saugbetrieb erforderlichen Aggregate, insbesondere ein Gebläse und die notwendigen Luftführungen vorgesehen, und in diesem Bereich befindet sich auch ein Schmutzaufnahmebehälter einschließlich des oder der zugehörigen Filter. Unterhalb des Rahmens 1 sitzt im vorderen Bereich ein im Reinigungsbetrieb in Eingriff mit dem zu reinigenden Boden stehender, sich drehend bewegender Seitenbesen 6 zum Zuführen des auf dem Boden befindlichen Schmutzes zur Mitte und vor eine drehend angetriebene, in Figur 1 von einer Abdeckung 9 verdeckte Kehrwalze, die den Schmutz durch eine Ansaugführung 7 in den Schmutzaufnahmebehälter wirft. Der Aufbau und die Funktionsweise einer solchen Kehrsaugmaschine ist allgemein bekannt und bedarf daher keiner weiteren Erläuterung.

Wie bereits erwähnt, wird die den aufgewirbelten Feinstaub mitnehmende Luft vor ihrem Austritt in die Umgebung durch mindestens einen Filter geleitet, um an diesem mitgerissene Schmutzteilchen abzulagern, so dass diese nicht wieder in die Umgebungsluft gelangen. Zu diesem Zweck können in derartigen Kehrsaugmaschinen Plattenfilter, Schlauchfilter, Patronenfilter o.ä. vorgesehen sein, und es ist möglich, entweder einen einzigen Filter zu verwenden oder mehrere Filter im Strömungsverlauf hintereinander anzuordnen. Der sich auf dem Filtermaterial dieser Filter ablagernde Schmutz reduziert selbstverständlich dessen Luftdurchlässigkeit, so dass es erforderlich ist, von Zeit zu Zeit eine Filterreinigung vorzunehmen, durch die die anhaftenden Schmutzteilchen bzw. der anhaftende, aus Schmutzteilchen zusammengesetzte Filterkuchen vom Filtermaterial gelöst wird.

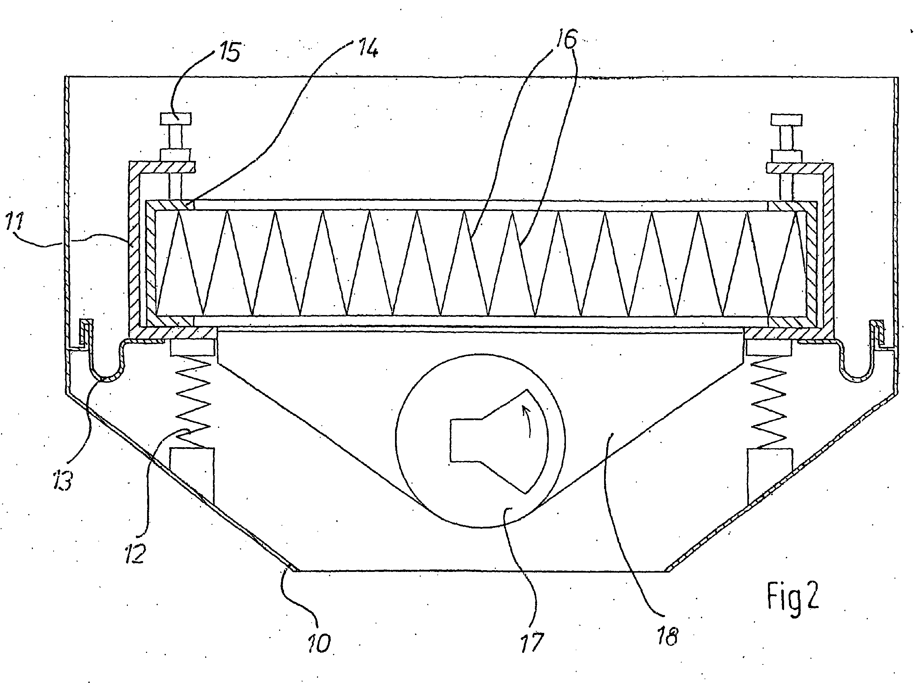

In der schematischen Darstellung gemäß Figur 2 ist ein Filtergehäuse 10 einer Kehrsaugmaschine gezeigt, das im Betrieb von unten nach oben von mit Schmutz beladener Luft durchströmt wird. In dem Filtergehäuse 10 ist ein Halterahmen 11 angeordnet, der sich auf elastischen Stützen 12 am Filtergehäuse 10 abstützt. Diese Stützen können durch Schraubenfedern gebildet sein, in die sich am Halterahmen 11 befestigte Dorne erstrecken, die die Lage des Halterahmens 11 im Filtergehäuse 10 festlegen. Der Halterahmen 11 ist ansonsten unter Freilassung eines Spalts im Filtergehäuse 10 angeordnet, und dieser Spalt ist durch eine umlaufende elastische Dichtung 13 abgedichtet, die den Durchtritt von ungefilterter Luft in diesem Bereich verhindert.

An der Unterseite des Halterahmens 11 erstreckt sich eine Traverse 18, an der ein schematisch dargestellter Rüttelmotor 17 gehalten ist. Hierbei handelt es sich um einen Elektromotor, der auf seiner Ankerwelle eine exzentrische Masse trägt. Derartige Rüttelmotoren sind bekannt. Gegebenenfalls kann zum drehenden Antreiben einer eine exzentrische Masse tragenden Welle auch ein durch Magnetwechselfeld bewegbarer Kolben, ein pneumatischer oder hydraulischer Arbeitszylinder o.ä. dienen.

Im Halterahmen 11 sitzt lösbar ein Plattenfilter, dessen rahmenförmiges Trägerteil 14 mittels einer Einspannung 15 festgesetzt ist und dessen im Trägerteil 14 gehalterte Filteranordnung aus durch ziehharmonikaartige Faltung von Filtermaterial gebildeten Lamellen 16 dazu dient, den von der hindurchtretenden Luft mitgeführten Schmutz zurückzuhalten. Daher lagert sich im Kehrsaugbetrieb an diesen Lamellen Schmutz ab, der die Luftdurchlässigkeit des Filtermaterials zunehmend verringert.
Ist ein gewisser Grad der Luftundurchlässigkeit erreicht, unterbricht die Bedienungsperson der Kehrsaugmaschine den Bodenreinigungsbetrieb und leitet einen Filterreinigungsvorgang ein. Hierzu wird der Rüttelmotor 17 aktiviert, so dass er durch seine Drehung Schwingungsenergie auf den Halterahmen 11 überträgt. Die Schwingungsenergie wirkt in der Zeichenebene gemäß Figur 2, so dass der Halterahmen 11 und damit der Plattenfilter in der Zeichenebene hin- und herbewegt werden. Der Elektromotor 17 wird dabei so gesteuert, dass er mehrfach, und zwar mindestens viermal, vorzugsweise sechsmal bis zehnmal, einen Drehzahlbereich durchläuft, der derart gewählt ist, dass bei seinem Durchlaufen eine Erregung der Filteranordnung mit ihrer Resonanzfrequenz stattfindet. Bei diesem Durchlaufen der Resonanzfrequenz erhöht sich die Vibrationsamplitude der Filterlamellen 16 erheblich gegenüber einer Erregung außerhalb der Resonanzfrequenz. Die deutlich erhöhten Auslenkungen der Filterlamellen 16 im Bereich der Resonanzfrequenz führen zu einem wirksamen Ablösen der Schmutzablagerungen.

Bei einem praktischen Versuch wurde der Rüttelmotor mehrfach mit Drehzahlen von 4000 U/min bis 5000 U/min und umgekehrt betrieben, um einen Plattenfilter, bei dem die Resonanzfrequenz der Filteranordnung bei etwa 75 Hz lag, im Bereich dieser Resonanzfrequenz zu erregen. Dabei erhöhten sich die Auslenkungen der Filterlamellen, die bei einer Beaufschlagung mit Schwingungsenergie außerhalb der Resonanzfrequenz eine Auslenkung von etwa ±2 mm erfuhren, auf eine Auslenkung von etwa ±6 mm bis ±7 mm, was eine ausgeprägte Erhöhung der Reinigungswirkung zur Folge hatte.

## Patentansprüche

1. Fahrbare Bodenreinigungsmaschine mit einem System zur Aufnahme von Schmutz vom Boden und Transport des Schmutzes in einen Schmutzsammelbehälter und zur Förderung von schmutzbeladener Luft
- durch mindestens einen Plattenfilter mit rahmenförmigen Trägerteil (14) und einer an diesem befestigten, lamellenförmiges Filtermaterial aufweisenden Filteranordnung (16),
- mit einem elastisch abgestützten und begrenzt bewegbar gehaltenen rechteckigen oder quadratischen Halterahmen (11), mit dem das Trägerteil (14) fest, jedoch lösbar verbunden ist, und
- mit einem Schwingungserzeuger (17), der bei unterbrochenem Bodenreinigungsbetrieb zur Reinigung der Filteranordnung (16) auf den Halterahmen (11) einwirken kann, **dadurch gekennzeichnet, dass** die Filteranordnung
- mit Schwingungsenergie einer Frequenz beaufschlagt wird, die während eines Reinigungsvorgangs mindestens viermal einen Frequenzbereich durchläuft, in dem die Resonanzfrequenz der Filteranordnung (16) liegt, so dass die Filteranordnung (16) in der Hauptebene des Halterahmens (11) und in Richtung senkrecht zur Längserstreckung der Lamellen in Schwingungen versetzt wird.

2. Bodenreinigungsmaschine nach Anspruch 1, **dadurch gekennzeichnet, dass** der Halterahmen (11) schwingungsisoliert gehalten ist.

3. Bodenreinigungsmaschine nach Anspruch 1 oder 2, **dadurch gekennzeichnet, dass** die obere Grenzfrequenz des Frequenzbereichs maximal um 30 % größer als die Resonanzfrequenz ist.

4. Bodenreinigungsmaschine nach Anspruch 3, **dadurch gekennzeichnet, dass** die obere Grenzfrequenz des Frequenzbereichs maximal um 20 %, vorzugsweise maximal um 10 % größer als die Resonanzfrequenz ist.

5. Bodenreinigungsmaschine nach einem der Ansprüche 1 bis 4, **dadurch gekennzeichnet, dass** die untere Grenzfrequenz des Frequenzbereichs maximal um 30 % kleiner als die Resonanzfrequenz ist.

6. Bodenreinigungsmaschine nach Anspruch 5, **dadurch gekennzeichnet, dass** die untere Grenzfrequenz maximal um 20 %, vorzugsweise maximal um 10 % kleiner als die Resonanzfrequenz ist.

7. Bodenreinigungsmaschine nach einem der Ansprüche 1 bis 6, **dadurch gekennzeichnet, dass** der Schwingungserzeuger einen Rüttelmotor (17) aufweist.

8. Bodenreinigungsmaschine nach einem der Ansprüche 1 bis 6, **dadurch gekennzeichnet, dass** der Schwingungserzeuger einen durch ein Magnetwechselfeld bewegbaren Kolben aufweist.

9. Bodenreinigungsmaschine nach einem der Ansprüche 1 bis 6, **dadurch gekennzeichnet, dass** der Schwingungserzeuger einen pneumatischen oder hydraulischen Arbeitszylinder aufweist.

10. Bodenreinigungsmaschine nach einem der Ansprüche 1 bis 9, **dadurch gekennzeichnet, dass** der Schwingungserzeuger (17) am Halterahmen (11) angebracht ist.

## Claims

1. Travelling floor cleaning machine with a system for picking up dirt from the floor and transporting the dirt into a dirt collecting container and for conveying dirt-laden air
- through at least one plate filter with a frame-like support element (14) and a filter arrangement (16) which is secured onto the latter and comprises lamella-like filter material,
- with an elastically supported rectangular or quadratic support frame (11) which can be moved to a limited degree, to which the support element (14) is connected securely but so as to be detachable, and
- with a vibration generator (17), which during an interruption of the floor cleaning operation for cleaning the filter arrangement (16) can affect the support frame (11),
**characterised in that** the filter arrangement is charged with vibrational energy at a frequency which during a cleaning operation passes at least four times through a frequency range, in which the resonance frequency of the filter arrangement (16) lies, so that the filter arrangement (16) is set into vibration in the main plane of the support frame (11) and in a direction perpendicular to the longitudinal extension of the lamellae.

2. Floor cleaning machine according to claim 1, **characterised in that** the support frame (11) is held in a vibrationally insulated manner.

3. Floor cleaning machine according to claim 1 or 2, **characterised in that** the upper limit frequency of the frequency range is a maximum of 30 % greater than the resonance frequency.

4. Floor cleaning machine according to claim 3, **characterised in that** the upper limit frequency of the frequency range is a maximum of 20 %, preferably a maximum of 10% greater than the resonance frequency.

5. Floor cleaning machine according to one of claims 1 to 4, **characterised in that** the lower limit frequency of the frequency range is a maximum of 30 % less than the resonance frequency.

6. Floor cleaning machine according to claim 5, **characterised in that** the lower limit frequency is maximum of 20 %, preferably a maximum of 10 % less than the resonance frequency.

7. Floor cleaning machine according to one of claims 1 to 6, **characterised in that** the vibration generator comprises a vibration motor (17).

8. Floor cleaning machine according to one of claims 1 to 6, **characterised in that** the vibration generator comprises a piston that can be moved by a magnetic alternating field.

9. Floor cleaning machine according to one of claims 1 to 6, **characterised in that** the vibration generator comprises a pneumatic or hydraulic actuator cylinder.

10. Floor cleaning machine according to one of claims 1 to 9, **characterised in that** the vibration generator (17) is attached onto the support frame (11).

## Revendications

1. Machine de nettoyage de sol mobile, comprenant un système de ramassage de saletés du sol, de transport des saletés dans un récipient collecteur de saletés et d'acheminement d'air chargé de saletés
- à travers au moins un filtre à plaques avec une partie de support (14) en forme de cadre et un dispositif de filtrage (16) fixé sur celle-ci et présentant un matériau filtrant lamellaire,
- avec un cadre de retenue (11) rectangulaire ou carré supporté de manière élastique et maintenu déplaçable de manière limitée, auquel la partie de support (14) est raccordée de manière fixe, mais détachable, et
- avec un vibrateur (17) qui, dans le cas où l'activité de nettoyage du sol est interrompue, peut agir sur le cadre de retenue (11) pour nettoyer le dispositif filtrant (16), **caractérisée en ce que** le dispositif filtrant est soumis à une énergie vibratoire d'une certaine fréquence, qui parcourt pendant une opération de nettoyage au moins quatre fois une plage de fréquences, dans laquelle se situe la fréquence de résonance du dispositif filtrant (16) de manière à faire vibrer le dispositif filtrant (16) dans le plan principal du cadre de retenue (11) et dans une direction perpendiculaire à l'extension longitudinale des lamelles.

2. Machine de nettoyage de sol selon la revendication 1, **caractérisée en ce que** le cadre de retenue (11) est maintenu isolé des vibrations.

3. Machine de nettoyage de sol selon la revendication 1 ou 2, **caractérisée en ce que** la fréquence limite supérieure de la plage de fréquences est au maximum supérieure de 30 % à la fréquence de résonance.

4. Machine de nettoyage de sol selon la revendication 3, **caractérisée en ce que** la fréquence limite supérieure de la plage de fréquences est au maximum supérieure de 20 %, de préférence au maximum supérieure de 10 %, à la fréquence de résonance.

5. Machine de nettoyage de sol selon l'une quelconque des revendications 1 à 4, **caractérisée en ce que** la fréquence limite inférieure de la plage de fréquences est au maximum inférieure de 30 % à la fréquence de résonance.

6. Machine de nettoyage de sol selon la revendication 5, **caractérisée en ce que** la fréquence limite inférieure est au maximum inférieure de 20 %, de préférence au maximum inférieure de 10 %, à la fréquence de résonance.

7. Machine de nettoyage de sol selon l'une quelconque des revendications 1 à 6, **caractérisée en ce que** le vibrateur comprend un moteur secoueur (17).

8. Machine de nettoyage de sol selon l'une quelconque des revendications 1 à 6, **caractérisée en ce que** le vibrateur comprend un piston déplaçable à travers un champ magnétique alternatif.

9. Machine de nettoyage de sol selon l'une quelconque des revendications 1 à 6, **caractérisée en ce que** le vibrateur comprend un cylindre de travail pneumatique ou hydraulique.

10. Machine de nettoyage de sol selon l'une quelconque des revendications 1 à 9, **caractérisée en ce que** le vibrateur (17) est monté sur le cadre de retenue (11).
